# EUROPÄISCHE PATENTANMELDUNG

(11) **EP 2 147 603 A2**
(43) Veröffentlichungstag der Anmeldung: **27.01.2010**
(21) Anmeldenummer: 09163884.1
(22) Anmeldetag: 26.06.2009
(51) Int. Cl.: A23C 3/04, A23C 9/12, A23L 3/36, F25D 13/06

(54) **Fermentierungs- und Kühltunnel**

(30) Priorität: 11.07.2008 DE 102008040355
(71) Anmelder: Voith Patent GmbH, 89522 Heidenheim (DE)
(72) Erfinder: Oertel, Uwe, 91257 Pegnitz (DE); Dusza, Sebastian, 95448 Bayreuth (DE)

(57) **Zusammenfassung**

Verfahren zum Fermentieren und Kühlen von im warmem Zustand abgefüllten Produkten, vorzugsweise Gärungsprodukten auf der Basis von Milch, in einem Raum mit mind. einem Stellplatz zum Einstellen von Produktstapeln (6), mit mind. einem Ventilator (2), mind. einer Kühlvorrichtung (3) und mind. einer Abtauheizvorrichtung (4), wobei die Produkte nach dem Abfüllen in Gefäße zum Fermentieren in den Raum eingebracht werden und nach dem Herunterkühlen der Produkte auf Lagertemperatur aus dem Raum entnommen werden, wobei in einer ersten Phase die Temperatur im Raum mit Hilfe der Abwärme des mind. einen Ventilators (2) und/oder der mind. einen Abtauheizvorrichtung (4) so geregelt ist, dass eine konstante Bruttemperatur gehalten wird, bis die Fermentation erreicht ist, und dass in einer zweiten Phase die Kühlvorrichtung eingeschaltet und die Abtauheizvorrichtung (4) abgeschaltet wird um die Produkte schnell auf Lagertemperatur herunter zu kühlen.

## Beschreibung

Die Erfindung betrifft ein Verfahren zum Fermentieren und Kühlen von Produkten, insbesondere von Lebensmitteln, vorzugsweise von Gärungsprodukten auf der Basis von Milch.

Solche Lebensmittel werden in der Regel im warmen Zustand in Gefäße gefüllt, in denen sie längere Zeit aufbewahrt werden sollen, wie z.B. Jogurtbecher. Nach dem Abfüllen werden die Produkte über mehrere Stunden in einem Brutraum auf einer produktabhängigen Temperatur zwischen 20-60°C gehalten, bis die Fermentation erreicht ist. Als Indikator das die Fermentation beendet ist, dient in der Regel der pH-Wert des Produktes.

Anschließend werden die Produkte in eine Kühlvorrichtung, meist ein Kühltunnel, gebracht und so schnell wie möglich mit Hilfe von Kühlluft, die um das zu kühlende Produkt geleitet wird, auf Lagertemperatur heruntergekühlt. Die Dauer der Abkühlung beträgt in der Regel ca. 1-2 Stunden und hängt von der Verpackungsart und -größe, der Fermentationstemperatur sowie der gewünschten Kühltemperatur ab.

Wird nicht schnell genug gekühlt nachdem der entsprechende pH-Wert erreicht worden ist, läuft der Fermentationsprozess weiter, so dass sich auch der pH-Werte weiter ändern. Dass heißt der Fermentationsprozess muss durch das Kühlen abgebrochen werden, damit sich der pH-Wert nicht mehr ändert. Eine zu lange Fermentation ist somit schädlich für das Produkt.

Ein entsprechender Kühltunnel wird z.B. in der EP1455151B1 oder in der DE202004003727U1 beschrieben. In diesen Kühltunneln wird in einem zum Teil geschlossenen Umlauf mechanisch gekühlte Luft um das Produkt herumgeblasen.
Die zur Kühlung der Luft notwendige technische Ausrüstung in einem Kühltunnel besteht im Wesentlichen aus einem Umluftventilator, einem Kühler, einer Abtauvorrichtung und entsprechenden Leitvorrichtungen für die Kühlluft.

Bei allen bekannten Verfahren und Vorrichtungen ist es notwendig einen separaten Raum für den Fermentationsprozess bereitzuhalten, so dass die Produkte nach der Fermentation zu dem Kühlraum/ Kühltunnel transportiert werden müssen. Dieser Transport muss möglichst schnell und erschütterungsfrei erfolgen um eine weiter pH-Wert Änderung zu verhindern und die fermentierten Produkte, die im warmen Zustand noch sehr empfindlich gegenüber Erschütterungen sind, zu schützen.

Ein weiterer Nachteil ist darin zu sehen, dass keine optimale Auslastung des Kühltunnels zu erreichen ist, da die Fermentation in der Regel doppelt so lange dauert wie die Kühlung.

Zudem kann beim Öffnen des Kühltunnels auch immer eine große Menge an warmer, feuchter Luft mit in den Kühltunnel gelangen, wodurch sich an der Kühlvorrichtung Eis ablagert und so ein optimaler Wärmeaustausch und ein optimaler Durchströmungsverlauf verhindert wird. Zur Beseitigung oder Reduzierung der Eisablagerungen müssen die Kühler regelmäßig mittels einer elektrisch betriebenen Heizvorrichtung abgetaut werden.

### Aufgabe der Erfindung

Der Erfindung, liegt die Aufgabe zugrunde, ein Verfahren bzw. eine Vorrichtung zum Fermentieren und zum Kühlen von Lebensmitteln, vorzugsweise von Gärungsprodukten auf der Basis von Milch zu schaffen, dass bzw. die ein wechselnde Nutzung zulässt.

### Erfindungsbeschreibung

Die Aufgabe wird mittels des Verfahrens mit den Merkmalen des Anspruchs 1 bzw. mittels eines Fermentierungs- und Kühltunnels mit den Merkmalen des Anspruches 8 gelöst.

Weitere Ausgestaltungen der vorliegenden Erfindung ergebnen sich aus den Unteransprüchen.

Das erfindungsgemäße Verfahren zum Fermentieren und Kühlen von im warmem Zustand abgefüllten Produkten, vorzugsweise Gärungsprodukten auf der Basis von Milch, wie z.B. Jogurtbecher, sieht nach dem Abfüllen in die Gefäße vor, die Produkte stapelweise, z.B. auf Paletten, zum Fermentieren in einen Fermentierungs- und Kühltunnel einzubringen.

Im Fermentierungs- und Kühltunnel befindet sich erfindungsgemäß mind. ein Stellplatz zum Einstellen von Produktstapeln, mind. ein Ventilator zur Erzeugung einer Luftströmung, mind. eine Kühlvorrichtung und mind. eine Abtauheizvorrichtung.

Erfindungsgemäß finden im Fermentierungs- und Kühltunnel zwei Verfahrenschritte bzw. ein Verfahren mit zwei Phasen statt.

In der ersten Phase wird die Temperatur im Fermentierungs- und Kühltunnel mit Hilfe der Abwärme des min. einen Ventilators und/oder der mind. einen Abtauheizvorrichtung konstant auf Bruttemperatur gehalten bis die Fermentation erreicht ist. Die Brut- oder Fermentationstemperatur beträgt in der Regel zwischen 20-60°C.

Die Fermentation (erste Phase) wird von Hand oder automatisch über die Temperaturregelung beendet, wenn ein vorbestimmter pH-Wert im Produkt erreicht ist.

Das erreichen der Fermentation kann z.B. durch die Entnahme von Produktenproben und Messung des pH-Wertes von Hand festgestellt werden oder es werden Vorgabewerte (Zeit, Temperatur) verwendet, die in Versuchen ermittelt wurden. Alternativ ist es auch denkbar dass der pH-Wert während des Prozesses online mittels einer Vorrichtung/Sensors gemessen wird und bei erreichen der Fermentation die Temperaturreglung die erste Phase automatisch beendet.

In der zweiten Phase wird die Kühlvorrichtung eingeschaltet und die Abtauheizvorrichtung abgeschaltet um die Produkte schnellstmöglich auf die erforderliche Lagertemperatur von ca.2-8°C herunter zu kühlen.

Nach dem Herunterkühlen der Produkte auf Lagertemperatur werden diese aus dem Kühltunnel entnommen und z.B. in einen Lagerraum gebracht.

Der Kühltunnel ist vorteilhafter weise so aufgebaut, dass links und rechts von einer mittig angeordneten Transporteinrichtung Stellplätze oder Stellplatzreihen angeordnet sind und jeder Stellplatzreihe mind. ein Ventilator, eine Kühlvorrichtung und eine Abtauheizvorrichtung zugeordnet ist. Wobei auch einreihige oder mehr als zweireihige Kühltunnel denkbar sind.

Dabei sind die Ventilatoren so ausgerichtet, dass die Luftströme für die linke bzw. rechte Seite gegensinnig verlaufen, vorzugsweise so, dass die erzeugten Luftströme einmal um die Produktstapel (oder Produktstapelreihe) herum kreisen und dabei zuerst durch die Kühlvorrichtung und Düsenplatte, dann quer zur Förderrichtung durch den Produktstapel und sich anschließend in der Mitte treffen und wieder getrennt zurück zu den Ventilatoren strömen.

Durch diese Anordnung ist es möglich auf beiden Seiten des Kühltunnels unterschiedliche Produkte mit leicht unterschiedlichen Wärme-/Kälteanforderungen gleichzeitig zu behandeln.

Zudem ist es denkbar den Kühltunnel in Transportrichtung mittels Schnelllauftoren in Zonen zu teilen, die jeweils unabhängig voneinander Regelbar sind.

Zur weiteren Optimierung der Stellplatzausnutzung ist es auch denkbar die Produkte innerhalb des Kühltunnels von einer Zone in eine andere Zone zu transportieren, wobei eine Zone die Funktion der Brutzone und die andere Zone die Funktion der Kältezone haben kann.

### Vorteile der Erfindung:

- geringerer Aufwand beim Händling der Produktstapel
- keine Erschütterung der Produkte zwischen Fermentierung und Kühlung
- geringerer Platzbedarf und Kostenersparnis durch den Wegfall des Fermentierungs-/Brutraums
- Verringerung der Eisbildung an der Kühlvorrichtung durch den Wechsel zwischen den Funktionen

### Figurenbeschreibung

Weitere Merkmale und Vorteile der Erfindung ergeben sich aus der nachfolgenden Beschreibung bevorzugter Ausführungsbeispiele unter Bezugnahme auf die Zeichnung. Es zeigen:
Figur 1 eine Draufsicht auf einen Fermentierungs- und Kühltunnel
Figur 2 eine Schnittdarstellung eines Fermentierungs- und Kühltunnels

In den folgenden Zeichnungen werden Ausführungsformen der vorliegenden Erfindung beispielhaft im Zusammenhang mit der Behandlung von Jogurtbechern beschrieben.

Im Rahmen der vorliegenden Erfindung sind jedoch auch andere Anwendungsfälle denkbar.

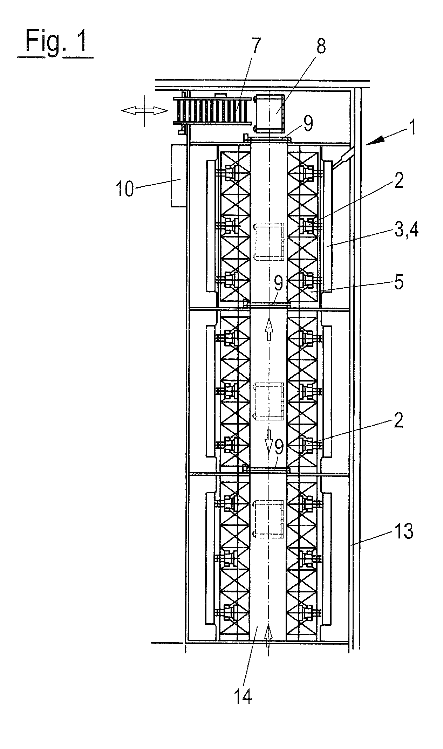

In Fig. 1 ist eine Draufsicht auf einen Fermentierungs- und Kühltunnel 1 dargestellt. Von der Produktionsmaschine kommend werden die Jogurtbecher zu Produktstapeln 6, z.B. auf Paletten verpackt, über die Zuführvorrichtung 7 und der Transportvorrichtung 8 in den Fermentierungs- und Kühltunnel 1 transportiert. Die Transportvorrichtung 8 ist so ausgelegt, dass sie die Produktstapel 6 beidseitig der Verfahrstrecke der Transportvorrichtung 8 die Produktstapel 6 auf die gewünschten Abstellplätze 5 abstellen und wieder abholen kann.

Für die Fermentierung (erste Phase) wird die benötigte Temperatur T1/T2 im Fermentierungs- und Kühltunnel 1 mit Hilfe der Abwärme von mind. einem eingeschalteten Ventilator 2 und/oder mind. einer Abtauheizvorrichtung 4 erzeugt.

Die benötigte Kaltluft für die Kühlung (zweite Phase) wird mittels der Kühlvorrichtung 3 erzeugt.

Der dargestellte Fermentierungs- und Kühltunnel 1 weist drei Zonen auf, die mittels Schnelllauftoren 9 voneinander trennbar sind. So ist es Vorteilhafterweise möglich in einer Zonen zu fermentieren und in einer anderen zu kühlen, so dass eine sehr flexible Nutzung des Tunnels möglich ist.

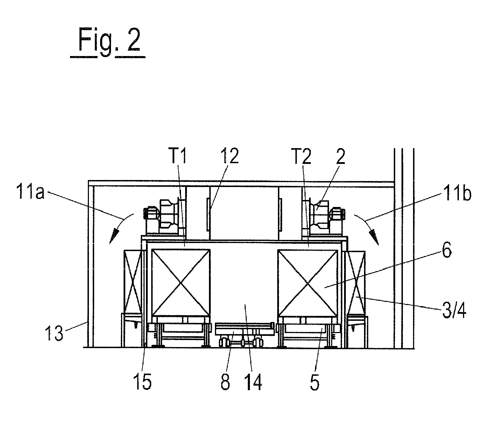

Fig. 2 zeigt eine Schnittdarstellung durch den Fermentierungs- und Kühltunnel 1 aus der weitere Details entnommen werden können. Innerhalb des Gehäuses 13 befinden sich auf einer oberen Ebene die Ventilatoren 2 und je Ventilator eine Rückschlagklappe 12. Die Ventilatoren 2 sind so ausgerichtet, dass die erzeugten Luftströme 11 a/11 b gegeneinander gerichtet sind, so dass innerhalb des Gehäuses zwei gegensinnig drehende Luftwalzen entstehen, die quer zur Transportrichtung der Transportvorrichtung verlaufen. Jeder Luftstrom 11 a/11 b nimmt bei seiner Rotation als erstes die Abwärme des Ventilatorantriebsmotors auf, danach wird der Luftstrom 11 a/11 b durch die Kühlvorrichtung 3 mit der darin enthaltenen Abtauheizvorrichtung 4 geleitet. Hier wird der Luftstrom 11 a/11 b je nach Bedarf auf die Fermentierungs-/Brüttemperatur erhöht bzw. gehalten oder auf die notwendige Kühltemperatur heruntergekühlt.

Nach der Kühlvorrichtung wird der Luftstrom 11a/11b durch die Düsenplatte 15 gleichmäßig verteilt und anschließend durch den Produktstapel 6, also um die Jogurtbecher herum, geleitet.

Im Transportgang 14 treffen sich die Luftströme 11 a/11 b und werden anschließend wieder, im oberen Bereich, getrennt den Ventilatoren 2 zugeführt. Um Feuchtigkeit abzuführen kann an dieser Stelle auch ein Luftaustausch stattfinden.

Die Rückschlagklappen 12 sind jeweils einem Ventilator 2 zugeordnet und verhindern, dass bei mehr als zwei nebeneinander angeordneten Ventilatoren 2 in einer Reihe und mind. einem nicht aktiven Ventilator, ein Luftkreislauf zwischen diesen entsteht.

Nach dem Einstellen von noch warmen Produktstapeln 6, regelt die Temperaturregelung die Fermentationstemperatur durch an und abschalten der(des) Ventilatoren 2 und/oder der Abtauheizvorrichtung 4 so, dass die Temperatur T1/T2 über mehrere Stunden konstant bleibt.

Als Nebeneffekt werden dabei auch eventuelle vorhandene Eisablagerungen an der Kühlvorrichtung 3 beseitigt.

Sobald die Fermentation abgeschlossen ist, kann sofort mit der schnellen Abkühlung auf Lagertemperatur begonnen werden, ohne die Produkte nochmals bewegen zu müssen. In der Regel ist nach ca. ein bis zwei Stunde die Lagertemperatur von vorzugsweise 5-8°C erreicht und die Produktstapel 6 können aus dem Fermentierungs- und Kühltunnel 1 entnommen werden.

### Bezugszeichenliste

- 1: Fermentierungs- und Kühltunnel
- 2: Ventilator
- 3: Kühlvorrichtung
- 4: Abtauheizvorrichtung
- 5: Abstellplatz
- 6: Produktstapel
- 7: Zuführvorrichtung
- 8: Transportvorrichtung
- 9: Schnelllauftor
- 10: Steuerung
- 11a/b: Luftstrom
- 12: Rückschlagklappe
- 13: Gehäuse
- 14: Transportgang
- 15: Luftleitvorrichtung

- T1/T2: Temperatur

## Patentansprüche

1. Verfahren zum Fermentieren und Kühlen von im warmem Zustand abgefüllten Produkten, vorzugsweise Gärungsprodukten auf der Basis von Milch, in einem Raum mit mind. einem Stellplatz zum Einstellen von Produktstapeln (6), mit mind. einem Ventilator (2), mind. einer Kühlvorrichtung (3) und mind. einer Abtauheizvorrichtung (4), wobei die Produkte nach dem Abfüllen in Gefäße zum Fermentieren in den Raum eingebracht werden und nach dem Herunterkühlen der Produkte auf Lagertemperatur aus dem Raum entnommen werden
**dadurch gekennzeichnet,**
**dass** in einer ersten Phase die Temperatur im Raum mit Hilfe der Abwärme des mind. einen Ventilators (2) und/oder der mind. einen Abtauheizvorrichtung (4) so geregelt ist, dass eine konstante Bruttemperatur gehalten wird, bis die Fermentation erreicht ist, und dass in einer zweiten Phase die Kühlvorrichtung eingeschaltet und die Abtauheizvorrichtung (4) abgeschaltet wird um die Produkte schnell auf Lagertemperatur herunter zu kühlen.

2. Verfahren nach Anspruch 1,
**dadurch gekennzeichnet,**
**dass** eine Temperaturreglung die Bruttemperatur auf 20-60°C hält.

3. Verfahren nach Anspruch 1,
**dadurch gekennzeichnet,**
**dass** die Temperaturreglung die Fermentation (erste Phase) automatisch beendet wenn ein vorbestimmter pH-Wert im Produkt erreicht ist.

4. Verfahren nach Anspruch 1,
**dadurch gekennzeichnet,**
**dass** die Temperaturreglung die Kühlvorrichtung so regelt, dass die Produkte auf eine Lagertemperatur zwischen 2-8°C heruntergekühlt werden.

5. Verfahren nach Anspruch 1,
**dadurch gekennzeichnet,**
**dass** der von dem mind. einen Ventilator (2) erzeugte Luftstrom (11) die Produkte quer zur Förderrichtung umströmt.

6. Verfahren nach den Ansprüchen 1
**dadurch gekennzeichnet,**
**dass** der Raum in mehrere Zonen teilbar ist und jede Zone für sich als Brut- oder Kühlzone regelbar ist.

7. Verfahren nach Anspruch 1 bis 6,
**dadurch gekennzeichnet,**
**dass** die Produkte innerhalb des Raumes von einer Zone zur anderen transportiert werden.

8. Fermentierungs- und Kühltunnel (1) zum Fermentieren und Kühlen von im warmem Zustand abgefüllten Produkten, vorzugsweise Gärungsprodukten auf der Basis von Milch, mit mind. einem Stellplatz (5) zum Einstellen von Produktstapeln (6), mit mind. einem Ventilator (2), mind. einer Kühlvorrichtung (3) und einer Abtauheizvorrichtung (4),
**dadurch gekennzeichnet,**
**dass** die Regelung des mind. einem Ventilators (2) und/oder der Abtauheizvorrichtung (4) wie auch der Ventilator (2) und die Abtauheizvorrichtung (4) selbst so ausgelegt sind, dass zum einen eine konstante Bruttemperatur erreicht und gehalten werden kann, sowie eine schnelle Kühlung auf Lagertemperatur möglich ist.

9. Fermentierungs- und Kühltunnel (1) nach Anspruch 8,
**dadurch gekennzeichnet,**
**dass** links und rechts von einer mittig angeordneten Transporteinrichtung (8) mind. ein Stellplatz (5) angeordnet ist und jeder Seite mind. ein Ventilator (2), eine Kühlvorrichtung (3) und eine Abtauheizvorrichtung (4) zugeordnet ist.

10. Fermentierungs- und Kühltunnel (1) nach Anspruch 9,
**dadurch gekennzeichnet,**
**dass** die Ventilatoren (2) zwei gegensinnige Luftströmungen (11a/11b) erzeugen, die jeweils mind. einen Stellplatz (5) durchströmen.

11. Fermentierungs- und Kühltunnel (1) nach Anspruch 9,
**dadurch gekennzeichnet,**
**dass** die Luftströme (11 a/11 b) der Ventilatoren (2) nach dem Durchströmen der Produktstapel (6) im Transportgang (14) zusammentreffen und anschließend wieder getrennt zu den Ventilatoren (2) geleitet werden.

12. Fermentierungs- und Kühltunnel (1) nach Anspruch 9,
**dadurch gekennzeichnet,**
**dass** die Luftströme (11a/11b) unterschiedliche Temperaturen T1/T2 haben.

13. Fermentierungs- und Kühltunnel (1) nach Anspruch 8,
**dadurch gekennzeichnet,**
**dass** mehrere Teilzonen vorhanden sind die durch Schnelllauftore (9) voneinander trennbar sind.

14. Fermentierungs- und Kühltunnel (1) nach Anspruch 8,
**dadurch gekennzeichnet,**
**dass** die Transportvorrichtung (8) Produktstapel (6) von einer Teilzonen in eine andere transportieren kann.

15. Fermentierungs- und Kühltunnel (1) nach Anspruch 13,
**dadurch gekennzeichnet,**
**dass** eine Vorrichtung zur direkten Messung des pH-Wertes vorhanden ist.
